Europäisches Patentamt

European Patent Office

Office européen des brevets

(11) Veröffentlichungsnummer: **0 169 366**

A2

(12) # EUROPÄISCHE PATENTANMELDUNG

(21) Anmeldenummer: 85107428.6

(22) Anmeldetag: 14.06.85

(51) Int. Cl.⁴: **A 47 J 41/02**
**B 65 D 39/08**

(30) Priorität: 25.07.84 DE 3427429

(43) Veröffentlichungstag der Anmeldung:
**29.01.86 Patentblatt 86/5**

(84) Benannte Vertragsstaaten:
**AT BE CH DE FR GB IT LI LU NL SE**

(71) Anmelder: **Rotpunkt Dr. Anso Zimmermann**
**Industriestrasse**
**D-6434 Niederaula / Bad Hersfeld(DE)**

(72) Erfinder: **Zimmermann, Anso, Dr.**
**Seilerweg 34**
**D-6430 Bad Hersfeld(DE)**

(74) Vertreter: **Körber, Wolfhart, Dr. et al,**
**Patentanwälte Dipl.-Ing. H. Mitscherlich Dipl.-Ing. K.**
**Gunschmann Dr.rer.nat. W. Körber Dipl.Ing. J.**
**Schmidt-Evers Dipl.-Ing. W. Melzer Steinsdorfstrasse 10**
**D-8000 München 22(DE)**

(54) **Isolierkanne.**

(57) Die Erfindung bezieht sich auf eine Isolierkanne, bestehend aus einem Gehäuse mit einer Öffnung im Bereich einer oberseitigen Ausnehmung im Gehäuse, von der sich ein Ausgießer radial auswärts erstreckt, wobei in die Ausnehmung ein Verschlüßstopfen einsetzbar ist, der einen Verschlußschieber trägt, der mittels einer um eine vertikale Achse drehbaren Handhabe und eines die Drehbewegung der Handhabe in eine Längsbewegung des Verschlußschiebers umwandelnden Verstellmechanismus zwischen einer die Öffnung verschließenden Schließstellung und einer die Öffnung freigebenden Offenstellung vertikal verstellbar ist, wobei Anschläge zur Begrenzung der Drehbewegung der Handhabe vorgesehen sind. Es ist der Zweck der Erfindung, die Isolierkanne zu vereinfachen und so auszugestalten, daß durch Drehen der Handhabe eine Verschlußkraft zur Wirkung gebracht werden kann, die von der Bedienungsperson unabhängig ist. Dies wird dadurch erreicht, daß dem Verstellmechanismus (21) zur Erzeugung der Schließbewegung des Verschlußschierbers (6) eine den Verschlußschieber (6) in Richtung auf die Öffnung (2) beaufschlagende Feder (36) und zur Erzeugung der Öffnungsbewegung des Verschlußschiebers (6) mindestens eine am Verschlußschieber (6) bzw. an der Handhabe (18) angeordnete geneigte Fläche (39) und mindestens ein an der Handhabe (18) bzw. am Verschlußschieber (6) angeordneter, mit der geneigten Fläche (39) zusammenwirkender Mitnehmer (41) zugeordnet ist.

./...

FIG.1

## Isolierkanne

Die Erfindung bezieht sich auf eine Isolierkanne nach dem Oberbegriff des Anspruchs 1.

Bei einer bekannten Isolierkanne dieser Bauart ist der Verschlußschieber durch eine Gewindespindel verschiebbar, die durch die Handhabe drehbar ist und in eine entsprechende Gewindebohrung des Verschlußschiebers einfaßt. Dabei ist die Handhabe mit der Gewindespindel gegen eine axiale Verschiebung gesichert und der Verschlußschieber ist gegen eine Verdrehung in Umfangsrichtung in seiner Führung gesichert.

Bei der bekannten Ausgestaltung wird der Verschlußschieber in beide Bewegungsrichtungen zwangsverschoben. Dies bedeutet, daß die Schließkraft, mit der der Verschlußschieber die Öffnung verschließt, von der Bedienungsperson bestimmt wird. Bei unsachgemäßer Behandlung ist es deshalb nicht auszuschließen, daß der Verschlußschieber mit einer zu hohen Kraft gegen den Verschluß gedrückt wird, wodurch Beschädigungen an der Gewindespindel oder an den Dichtungen des Verschlußschiebers auftreten können. Außerdem baut der bekannte Spindeltrieb aufgrund der zweiseitigen Zwangsführung durch benachbarte Gewindegänge verhältnismäßig hoch, was den Forderungen einer möglichst niedrigen Bauweise für Isolierkannen entgegensteht. Die bekannte Ausgestaltung ermöglicht ein Montieren bzw. Zusammenfügen des Spindeltriebs auch nur durch ein Auf- bzw. Eindrehen der Spindeltriebteile, wobei in jedem Falle Rotationsbewegungen notwendig sind.

Der Erfindung liegt die Afugabe zugrunde, eine Isolierkanne der eingangs bezeichneten Bauart ausgestaltungsmäßig zu vereinfachen und gleichzeitig so auszubilden, daß durch Drehen der Handhabe ein vorbestimmbare, von die Bedienungsperson unabhängige Verschlußkraft zur Wirkung gebracht werden kann.

Diese Aufgabe wird durch die im Anspruch 1 enthaltenen Merkmale gelöst.

Bei der erfindungsgemäßen Ausgestaltung ist der Verschlußschieber lediglich bei seiner Verschiebung in die Offenstellung zwangsgeführt. Bei dieser Bewegungsrichtung ist eine Zwangsführung unschädlich, weil der Verschlußschieber von seinem Verschluß abgehoben wird und Anschläge vorgesehen werden können, die die Öffnungsbewegung begrenzen. Dagegen ist die Schließbewegung des Verschlußschiebers nicht zwangsgeführt, sie wird lediglich durch die erfindungsgemäße geneigte Fläche gesteuert. Eine Schließkraft ist auf den Verschlußschieber durch das Drehen der Handhabe nicht zu übertragen. Diese Funktion erfüllt eine Feder, die den Verschlußschieber in Richtung auf seine Verschließstellung beaufschlagt. Durch ein Verdrehen der Handhabe ist somit die Schließwirkung der Feder beeinflußbar. Dabei kann eine erwünschte Flächenpressung am Verschluß unter Berücksichtigung vorgegebener Kriterien, z.B. Werkstoffe oder weiterer Bestimmungsgrößen, z.B. Dampfdruck, berücksichtigt werden. Darüberhinaus führt die erfindungsgemäße Ausgestaltung auch zu einer Vereinfachung der Ausgestaltung, weil keine Zwangsführung vorhanden ist. Der Mitnehmer liegt vielmehr an einer offenen geneigten Fläche an, wodurch auch ein Montieren durch einfaches Zusammenstecken möglich ist.

Die Ausbildung nach Anspruch 2 führt nicht nur zu einer leichten Handhabung, weil ein ausreichend langer Betätigungsweg zur Verfügung steht, sondern sie ermöglicht in Verbindung mit der Ausbildung nach Anspruch 15 eine leichte Erkennung, ob sich die Handhabe bzw. der für den Verschlußschieber (6) bildet.

7. Isolierkanne nach den Ansprüchen 5 und 6,
   dadurch gekennzeichnet,
   daß die geneigten Flächen (39) an einer Schulter (38)
   eines im Querschnitt im wesentlichen kreisrunden
   Schaftes (15) für den Verschlußschieber (6) ausgebildet sind und die Mitnehmer (41) innenseitig am
   die Längsführung bildenden Teil (25) der Handhabe (18)
   angeordnet sind sowie die geneigten Flächen untergreifen.

8. Isolierkanne nach einem der Ansprüche 1 bis 7,
   dadurch gekennzeichnet,
   daß der Verschlußstopfen (5) hohl ist und ein Stopfenunterteil (22) und ein Stopfenoberteil (23) aufweist, die aneinander verrastbar sind und daß die
   Handhabe (18) im bzw. am Stopfenoberteil (23) gelagert ist.

9. Isolierkanne nach Anspruch 8,
   dadurch gekennzeichnet,
   daß die Lagerung durch eine Bohrung im Stopfenoberteil (23) gebildet ist, die von der Handhabe (18)
   und/oder Anbauteilen derselben mit Bewegungsspiel
   durchfaßt und über- und untergriffen wird.

1o. Isolierkanne nach Anspruch 8 oder 9,
    dadurch gekennzeichnet,
    daß der den Schaft (15) des Verschlußschiebers (6)
    antreibende Teil (25) der Handhabe (18) durch eine
    Verrastung (26,27) und mit formschlüssiger Drehsicherung
    (28,29) lösbar an der Handhabe (18) befestigbar ist.

11. Isolierkanne nach Anspruch 9 oder 1o,
    dadurch gekennzeichnet,

daß die Stoßfläche zwischen der Handhabe (18) und der Führung (25) im Bereich der Wand des Stopfenoberteils (23) angeordnet ist.

12. Isolierkanne nach einem der Ansprüche 1 bis 11, dadurch gekennzeichnet, daß im unteren Bereich des Verschlußstopfens (5) wenigstens eine Ringdichtung (57) zur Abdichtung des Schaftes (15) angeordnet ist.

13. Isolierkanne nach einem der Ansprüche 1 bis 12, dadurch gekennzeichnet, daß zwischen dem Verschlußstopfen (5) und dem Gehäuse (1) eine Dichtung angeordnet ist und der Ausgießer eine geschlossene Schnaupe (8) ist.

14. Isolierkanne nach einem der Ansprüche 1 bis 13, dadurch gekennzeichnet, daß der Verschlußstopfen (5) ein Schraubstopfen ist und in seiner vollends in die Ausnehmung (11) eingeschraubten Stellung lösbar einrastet.

15. Isolierkanne nach einem der Ansprüche 2 bis 14, dadurch gekennzeichnet, daß auf der Handhabe (18), insbesondere auf einer das Stopfenoberteil (23) überdeckenden Deckwand (53) der Handhabe (18) eine Markierung (45) angebracht ist, die in der Offenstellung der Handhabe (18) über dem Griff (6) oder in der Schließstellung der Handhabe (18) über der Schnaupe (8) steht.

Die wesentlichen Teile der Isolierkanne sind ein aus Kunststoff bestehendes Schutzgehäuse 1 mit einer oberseitigen Öffnung 2, einem unterhalb der Öffnung 2 in nicht dargestellter Weise gegen eine innere Schulter 3 gespannten Isoliereinsatz 4 mit einer zur Öffnung 2 im Schutzgehäuse 1 koaxialen Öffnung gleichen Querschnitts und einem allgemein mit 5 bezeichneten Verschlußstopfen, der unterseitig einen Verschlußschieber 6 trägt.

An das Schutzgehäuse 1 sind einstückig ein Griff 7 und eine geschlossene Schnaupe 8 angeformt. Der Verschlußstopfen 5 ist mittels Gewindegängen 9 in eine sich oberhalb der Öffnung 2 erstreckende runde Ausnehmung 11 im Schutzgehäuse 1 eingeschraubt, von der sich der Ausgießkanal 12 in der Schnaupe 8 radial und schräg aufwärts erstreckt.

In der dargestellten Position befindet sich der Verschlußstopfen 5 in seiner Verschlußstellung. D.h., der Verschlußstopfen 5 selbst ist vollends in die Ausnehmung 11 eingeschraubt, wobei er mit einer Schulter 13 dichtend auf der Oberseite 14 des Schutzgehäuses 1 aufliegt, und der Verschlußschieber 6, der mit seinem Schaft 15 vertikal verschiebbar im Verschlußstopfen 5 geführt ist, liegt mit einer elastischen Ringdichtung 16 dichtend auf dem Rand 17 der Öffnung 2 auf.

Der Verschlußschieber 6 ist zwischen seiner dargestellten Schließstellung und einer vom Rand 17 der Öffnung 2 abgehobenen Offenstellung durch eine Handhabe 18 verstellbar, die um die Vertikalachse 19 der Isolierkanne drehbar ist. Zwischen der Handhabe 18 und dem Verschlußschieber 6 ist ein allgemein mit 21 bezeichneter Verstellmechanismus mit einem Getriebe angeordnet, das die Drehbewegung der Handhabe in die Längsbewegung des Verschlußschiebers 6 umwandelt.

Der im Querschnitt runde Verschlußstopfen ist hohl ausgebildet und besteht aus einem wannenförmigen Stopfenunterteil 22 und einem deckelförmigen Stopfenoberteil 23, das bei 24 ein Lager für die drehbare Handhabe 18 bildet. Die Handhabe 18 ist verdrehungssicher mit einer Mitnehmertrommel 25 verrastet, die den Schaft 15 umgibt und längs der Vertikalachse 19 führt. Die Verrastung wird durch einen äußeren Ringvorsprung 26 gebildet, der in eine innere Ringnut 27 in der Handhabe 18 eingerastet ist. Die Drehmitnahme erfolgt durch zwei stirnseitige Zapfen 28 an der Mitnehmertrommel 25, die Löcher 29 in einer Wand 31 der Handhabe 18 durchfassen. Die hohlzylindrische Mitnehmertrommel 25 ist mit einem Längsabschnitt 32 in einer mittigen Bohrung 33 des Stopfenoberteils 23 gelagert, wobei das Stopfenoberteil 23 mit geringem Bewegungsspiel zwischen einer Schulter 34 der Mitnehmertrommel 25 und einem axialen Ringansatz 35 der Handhabe 18 aufgenommen ist. Hierdurch ist das Lager 24 gebildet.

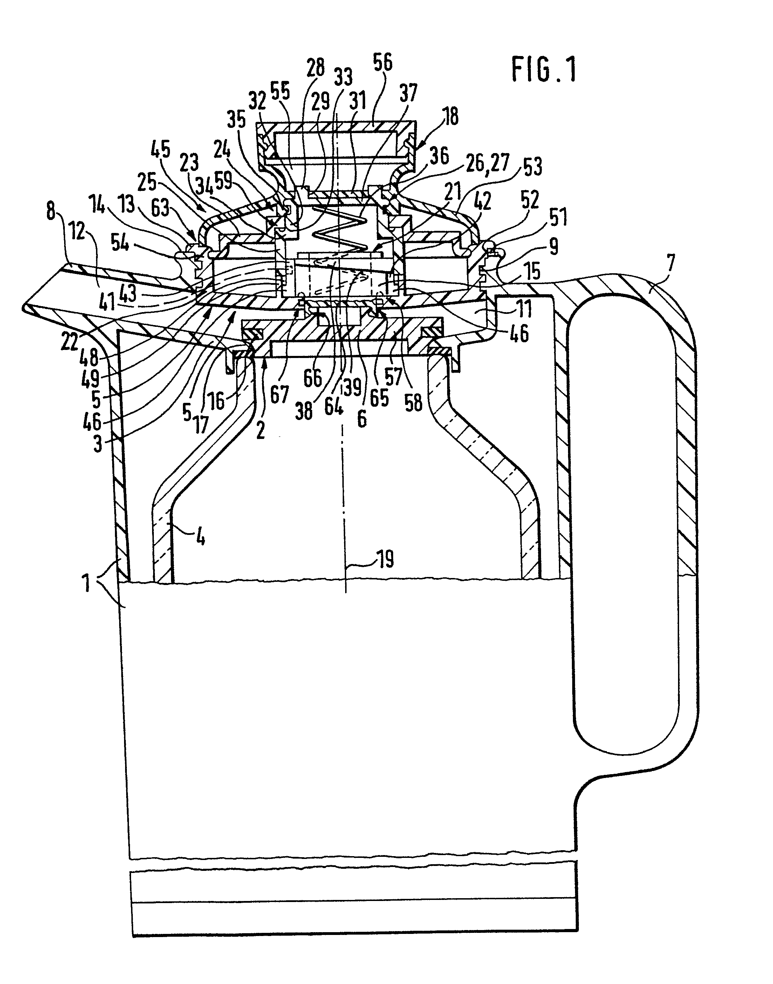

Der Schaft 15 ist ein topfförmiges Bauteil, in dem das untere Ende einer Druckfeder 36 aufgenommen ist, die sich mit ihrem oberen Ende an einer Wand 37 der Mitnehmertrommel 25 abstützt und den Verschlußschieber 6 in Richtung auf die Öffnung 2 beaufschlagt. Von der zylindrischen Außenseite des Schaftes 15 springen einander diametral gegenüberliegend zwei segmentförmige Ansätze 38 vor, deren der Öffnung 2 zugewandte Flächen 39 zur der Öffnung 2 abgewandten Seite geneigt sind. Die Neigung erstreckt sich -in der Draufsicht gesehen- im Gegenuhrzeigersinn. Die geneigten Flächen 39 werden von zwei von der Innenseite der Mitnehmertrommel 25 vorspringenden, einander diametral gegenüberliegenden Mitnehmerzapfen 41 unterfaßt. Infolgedessen wird der Verschlußschieber 6 beim Drehen der Handhabe 18 im Gegenuhrzeigersinn durch die Wirkung der geneigten Flächen 39 vom Rand 17 der Öffnung 2 abgehoben und in die nicht dargestellte Offenstellung bewegt, wobei die Druckfeder 36 zusammengedrückt wird. Beim Drehen der Handhabe im Uhrzeigersinn senkt sich der Verschlußschieber 6 unter der Spannung der Druckfeder 36 und gelangt in seine dargestellte Schließstellung. In Fig. 1 ist nur ein Mitnehmerzapfen 41 strichpunktiert angedeutet.

Die Öffnungs- bzw- Schließbewegung der Handhabe 18 beträgt eine halbe Umdrehung. Die Öffnungsbewegung wird durch Anschläge 42 begrenzt, die sich von den geneigten Flächen 39 abwärts erstrecken. Die Schließbewegung wird durch das Aufsetzen des Verschlußschiebers 6 auf den Rand 17 der Öffnung 2 begrenzt. Um auch bei abgehobenem Verschlußstopfen 5 die Schließbewegung begrenzen zu können, sind Anschläge 43 vorgesehen, die in der dargestellten Verschlußstellung des Verschlußstopfens 5 jedoch nicht zur Wirkung kommen, um die Abdichtung des Verschlußschiebers 6 nicht zu behindern. Die jeweilige Stellung der Handhabe 18 wird durch eine andeutungsweise mit 45 bezeichnete Markierung angezeigt, die sich auf der Oberseite des Verschlußstopfens 5 befindet und zwecks deutlicher Kennzeichnung, bevorzugt durch einen roten Punkt oder einen roten Kreis, gebildet ist. In der dargestellten Schließstellung befindet sich die Markierung 45 über der Schnaupe 8 und in der nicht dargestellten Offenstellung über dem Griff 7.

Zwecks Verdrehsicherung des Schaftes 15 weist dieser auf seiner zylindrischen Außenfläche zwei einander diametral gegenüberliegende Vorsprünge 46 auf, die radiale Verlängerungen der Anschläge 42,43 darstellen und zwischen vertikalen Führungsflächen 48 an einem innenseitigen, ggf. ringförmigen Vorsprung 49 des Stopfenunterteils 22 aufgenommen sind.

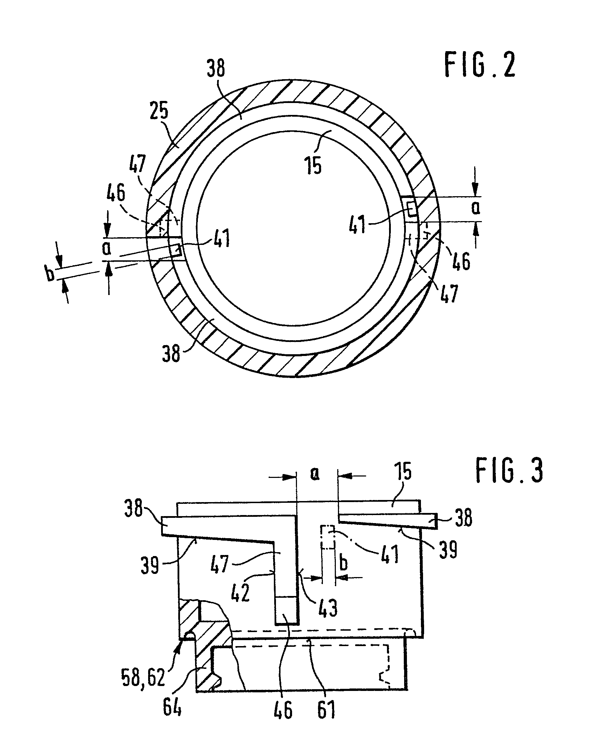

Aus Fig. 2 und 3 ist am besten zu erkennen, daß die Anschläge 42,43 und die Vorsprünge 46 durch axiale Stege 47 gebildet sind, die sich auf der zylindrischen Außenfläche des Schaftes 15 von den segmentförmigen Absätzen 38 senkrecht nach unten erstrecken. Die den Stegen 47 abgewandten Enden der segmentförmigen Ansätze 38 enden in einem Abstand a vor den Anschlägen 43, der größer bemessen ist als die Breite b der Mitnehmerzapfen 41. In der in Fig. 3 strichpunktiert dargestellten Stellung des Mitnehmerzapfens 41 befindet dieser sich in der Schließstellung des Verschlußschiebers 6. Es ist deutlich erkennbar, daß in dieser Stellung der Mitnehmerzapfen 41 nicht mit dem Anschlag 43 zusammenwirkt, damit der dichte Verschluß an der Öffnung 2 nicht behindert wird. Oberseitig kommt auch der betreffende segmentförmige Ansatz 38 nicht zur Wirkung mit dem Mitnehmerzapfen 41, weil der Ansatz 38 vor dem Mitnehmerzapfen 41 endet. Infolgedessen kommt die von der Druckfeder 36 aufgebrachte Spannkraft am Schaft 15 und somit am Verschlußschieber 6 voll zur Wirkung.

Das Ein- bzw. Ausschrauben des Verschlußstopfens 5 erfolgt durch Drehen der Handhabe 18. Beim Einschrauben liegen die Mitnehmerzapfen 41 an den Anschlägen 43 und beim Ausschrauben an den Anschlägen 42 an. Damit beim Drehen der Handhabe 18 in Öffnungsrichtung der Verschlußstopfen 5 aus seiner dargestellten Verschlußstellung nicht mitgenommen wird, ist er in dieser seiner Verschlußstellung durch eine einen Druckpunkt erzeugende Verrastung verstärkt gehalten. Eine solche Verrastung kann durch einen ggf. durch eine Federkraft beaufschlagten und andeutungsweise dargestellten Stift 51 oder dergleichen gebildet sein, der in der Schließstellung des Verschlußschiebers 6 einen Nocken 52 überfährt.

Das Stopfenoberteil 23 ist vollständig durch eine von der Handhabe 18 ausgehende Deckwand 53 überdeckt, die auf dem hohlzylindrischen Wandteil 54 des Stopfenunterteils 23 bevorzugt dichtend aufliegt. Die weiteren Hohlräume des Verschlußstopfens 5 sind ebenfalls abgedichtet. Der Hohlraum 55 in der Handhabe 18 ist durch einen eingerasteten Deckel 56 dicht verschlossen, der ggf. auch angeklebt sein kann. Die Führung zwischen dem Stopfenunterteil 22 und dem Schaft 15 ist ebenfalls durch eine andeutungsweise dargestellte Ringdichtung 57 abgedichtet, die in einer Nut im Stopfenunterteil 22 aufgenommen ist und mit der zylindrischen Wandung des Schaftes 15 zusammenwirkt. Die Abdichtung zwischen dem Verschlußstopfen 5 und dem Schutzgehäuse 1 im Bereich der Schulter 13 kann ebenfalls durch eine in üblicher Weise angeordnete Ringdichtung gebildet sein.

Darüberhinaus sind zwei weitere Dichtungen vorgesehen, die in Fig. 1 allgemein mit 58 und 59 bezeichnet sind. Die Dichtung 58 besteht zwischen der Innenwand des Stopfenunterteils 22 und der nur in Fig. 3 mit 61 bezeichneten Schulterfläche und weist eine Dichtlippe 62 auf, die durch eine Hohlkehle in der Schulterfläche 61 gebildet sein kann. Die Dichtung 58,62 kann zusätzlich zur Ringdichtung 57 oder als auch einzige Dichtung an dieser Stelle vorgesehen sein. Die Dichtung 58 hat sich als sehr preiswert herstellbar und funktionstüchtig erwiesen. Ihre Wirkung ist allerdings von der Anlage der Schulterfläche 61 am Stopfenunterteil 22 abhängig. Diese Anlage ist im Normalfall jedoch gewährleistet.

Die Dichtung 59 entspricht in ihrer Ausführungsform der Dichtung 58 und sie wirkt mit der Innenfläche des Stopfenoberteils 23 zusammen. Es ist der Zweck der Dichtung 59 bei 63 zwischen der Deckwand 53 und dem hohlzylindrischen Wandteil 54 des Stopfenunterteils 22 eingedrungene Flüssigkeit abzudichten.

Die Montage des Verschlußstopfens 5 kann folgendermaßen erfolgen. Zunächst werden die Mitnehmertrommel 25 und die Handhabe 18 bei Zwischenlage des Stopfenoberteils 23 miteinander verrastet. Ein zweiter Montageschritt, der auch parallel erfolgen kann, besteht in der Einführung des Schafthalses 64 in die Bohrung 65 im Stopfenunterteil 22, die ebenfalls eine Führung dargestellt Nachdem nunmehr die Druckfeder 36 in den topfförmigen Hohlraum im Schaft 15 eingesetzt worden ist, können das Stopfenoberteil 23 und das Stopfenunterteil 22 miteinander verrastet werden, wobei in bevorzugter Weise die Mitnehmertrommel 25 unterseitig auf den hohlzylindrischen Vorsprung 49 und die Deckwand 53 auf den hohlzylindrischen Wandteil 54 des Stopfenunterteils 22 abgestützt werden können.

Der Verschlußschieber 6 kann nach dieser Montage mittels einer durch einen wulstförmigen Vorsprung und eine diesen aufnehmende Nut gebildete Verrastung 66 am Schafthals 64 befestigt werden. Bei einem Austausch des Verschlußschiebers 6 bedarf es somit auch keiner Demontage des Verschlußstopfens 5, denn die lösbare Verrastung 66 ermöglicht einen solchen Austausch.

Bis auf die Druckfeder 36, die aus Federstahl besteht, und den Isoliereinsatz 4, der aus doppelwandigem, evakuiertem Glas besteht, bestehen die Einzelteile der vorbe schriebenen Isolierkanne aus Kunststoff. Hierdurch wird nicht nur die Herstellung der Teile erleichtert, sondern insbesondere in den Fällen, in denen Einzelteile aneinander verrastet werden, eignen sich Kunststoffteile aufgrund ihrer Elastizität.

**0169366**

PATENTANWÄLTE

Dipl.-Ing. H. MITSCHERLICH
Dipl.-Ing. K. GUNSCHMANN
Dipl.-Ing.Dr.rer.nat. W. KÖRBER
Dipl.-Ing. J. SCHMIDT-EVERS
Dipl.-Ing. W. MELZER

EUROPEAN PATENT ATTORNEYS

Telefon (08⁻¹ 29 66 84-86
Telex 523 155 mitsh d
Telegramme Patentpaap
Telecopier (089) 29 39 63
Psch-Kto. Mchn. 195 75-803
EPA-Kto. 28 000 206

Steinsdorfstraße 10
D-8000 München 22

ROTPUNKT
Dr. Anso Zimmermann
Industriestraße

6434 Niederaula / Bad Hersfeld

-------------------------------

ANSPRÜCHE

1. Isolierkanne, bestehend aus einem Gehäuse mit einer Öffnung im Bereich einer oberseitigen Ausnehmung im Gehäuse, von der sich ein Ausgießer radial auswärts erstreckt, wobei in die Ausnehmung ein Verschlußstopfen einsetzbar ist, der einen Verschlußschieber trägt, der mittels einer um eine vertikale Achse drehbaren Handhabe und eines die Drehbewegung der Handhabe in eine Längsbewegung des Verschlußschiebers umwandelnden Verstellmechanismus zwischen einer die Öffnung verschliessenden Schließstellung und einer die Öffnung freigebenden Offenstellung vertikal verstellbar ist, wobei Anschläge zur Begrenzung der Drehbewegung der Handhabe vorgesehen sind,

dadurch gekennzeichnet,

daß dem Verstellmechanismus (21) zur Erzeugung der Schließbewegung des Verschlußschiebers (6) eine den Verschlußschieber (6) in Richtung auf die Öffnung (2) beaufschlagende Feder (36) und zur Erzeugung der Öffnungsbewegung des Verschlußschiebers (6) mindestens eine am Verschlußschieber (6) bzw. an der Handhabe (18) angeordnete geneigte Fläche (39) und mindestens ein an der Handhabe (18) bzw. am Verschlußschieber (6) angeordneter, mit der geneigten Fläche (39) zusammenwirkender Mitnehmer (41) zugeordnet ist.

2. Isolierkanne nach Anspruch 1,
dadurch gekennzeichnet,
daß die Drehbewegung der Handhabe (18) zwischen ihrer Offenstellung und Schließstellung etwa eine halbe Umdrehung beträgt.

3. Isolierkanne nach Anspruch 1 oder 2,
dadurch gekennzeichnet,
daß in der Schließstellung des Verschlußschiebers (6) zwischen dem Mitnehmer (41) und der geneigten Fläche (39) ein Abstand besteht, insbesondere die geneigte Fläche (39) vor der Schließstellung des Mitnehmers (41) endet.

4. Isolierkanne nach einem der Ansprüche 1 bis 3,
dadurch gekennzeichnet,
daß die geneigte Fläche (39) sich auf einem segmentförmigen Abschnitt erstreckt, daß wenigstens die Öffnungsbewegung der Handhabe (18) durch einen am betreffenden Ende der geneigten Fläche (39) angeordneten Anschlag begrenzt ist und der Mitnehmer durch einen Mitnehmerzapfen (41) gebildet ist.

5. Isolierkanne nach einem der Ansprüche 1 bis 4,
dadurch gekennzeichnet,
daß zwei einander diametral gegenüberliegende geneigte Flächen (39) und Mitnehmer (41) angeordnet sind.

6. Isolierkanne nach einem der Ansprüche 1 bis 5,
dadurch gekennzeichnet,
daß der den Mtinehmer (41) oder die geneigte Fläche (39) tragende Teil der Handhabe (18) eine Längsführung

Verschlußschieber in der Offen- oder Schließstellung befindet. Die Markierung und Erkennung ist deshalb einfach, weil lediglich die Handhabe einer Markierung bedarf. Diese Markierung wirkt mit der Schnaupe bzw. dem Griff der Isolierkanne zusammen, die schon von ihrer Anordnung her eine unerfahrene Bedienungsperson die Schließ- und Offenstellung erkennen läßt.

Durch die Ausgestaltung nach Anspruch 3 wird eine Einflußnahme der geneigten Fläche auf den Verschlußschieber in seiner Schließstellung verhindert. In dieser Stellung kann die Kraft der Feder in vollem Umfang auf den Verschlußschieber wirken.

Die im Anspruch 4 enthaltenen Merkmale führen zu einer einfachen Bauform, bei der wenigstens der Anschlag für die Öffnungsbewegung des Verschlußschiebers in einfacher Weise am betreffenden Ende der geneigten Fläche angeordnet werden kann. Dabei ist aufgrund der zapfenförmigen, d.h. in Umfangsrichtung möglichst kurzen Ausbildung des Mitnehmers ein befriedigende Bewegungsstrecke für die Handhabe möglich. Bei der bekannten Ausgestaltung erfüllt diesen Zweck ein verhältnismäßig langer Gewindegang, für den ein entsprechender Freiraum vorzusehen ist.

Die Ausbildung nach Anspruch 5 ermöglicht eine ausgewogene Belastung der beteiligten Bauteile, wobei die Mitnehmerzapfen in einer gleichen Höhe angeordnet werden können.

Die Ausgestaltungen nach den Ansprüchen 6 bis 11 sind nicht nur im Hinblick auf einfache Raum- und Bauformen und wegen Material- und Gewichtsersparnis vorteilhaft, sondern auch aus Montage- bzw. Demontagegründen.

4

Es werden günstige Raum- und Bauformen unter Einbeziehung bzw. Anpassung an den Verstellmechanismus erzielt.

Durch die Ausbildung nach Anspruch 12 wird das Eindringen von Flüssigkeit in den hohlen Verschlußstopfen sowohl während der Benutzung der Isolierkanne als auch während der Reinigung des Verschlußstopfens verhindert.

Die Abdichtungsmaßnahme nach Anspruch 13 ist bei einer geschlossenen Schnaupe deshalb vorteilhaft, weil beim Ausgießen in stark geneigter Stellung Flüssigkeit in der oberseitigen Gehäuseausnehmung aufgrund von Strömungsstau in der geschlossenen Schnaupe hochsteigt und im Bereich der Fassung des Verschlußstopfens auszufließen vermag. Dies wird durch die Dichtung zwischen dem Verschlußstopfen und dem Gehäuse verhindert. Die Flüssigkeit in der oberseitigen Ausnehmung vermag deshalb nur durch die geschlossene Schnaupe auszufließen.

Durch die Ausbildung nach Anspruch 14 wird verhindert, daß aufgrund der beim Drehen der Handhabe zwischen ihrer Offen-und Schließstellung am Verschlußstopfen wirkenden Reibungskräfte oder beim Anschlagen gegen den betreffenden Anschlag der Verschlußstopfen aus seiner Verschlußstellung aufgeschraubt wird.

Nachfolgend wird ein Ausführungsbeispiel der Erfindung anhand einer vereinfachten Zeichnung beschrieben.

Es zeigt

Fig. 1    eine erfindungsgemäß ausgestaltete Isolierkanne
          im senkrechten Teilschnitt,

Fig. 2    einen Teilschnitt nach der Linie II-II in Fig. 1,

Fig. 3    ein Einzelteil der Isolierkanne.

FIG.1

FIG.2

FIG.3